# EUROPÄISCHE PATENTSCHRIFT

(11) **EP 1 378 600 B1**
(45) Veröffentlichungstag und Bekanntmachung des Hinweises auf die Patenterteilung: **12.12.2007**
(21) Anmeldenummer: 03015121.1
(22) Anmeldetag: 03.07.2003
(51) Int. Cl.: D06M 15/564, C08G 18/12, C08G 18/40, C08G 18/80

(54) **Wässrige Zusammensetzung zur Filzfreiausrüstung von Wolle**
Aqueous composition for the anti-felting treatment of wool
Composition aqueuse pour traitement anti-feutrant de laine

(30) Priorität: 05.07.2002 EP 02015086
(43) Veröffentlichungstag der Anmeldung: 07.01.2004
(73) Patentinhaber: DyStar Textilfarben GmbH & Co. Deutschland KG, 65926 Frankfurt am Main (DE)
(72) Erfinder: Ritter, Wolfgang, 67591 Offstein (DE); Stukenbrock, Thomas, 64653 Lorsch (DE); Bayer, Thomas, 68307 Mannheim (DE)
(74) Vertreter: Muley, Ralf

(56) Entgegenhaltungen:
- DE-A- 19 919 816
- GB-A- 2 003 521
- US-A- 4 039 517

## Beschreibung

Die vorliegende Erfindung betrifft eine wässrige Zusammensetzung zur Filzfreiausrüstung von Wolle oder wollhaltigen Textilien sowie ein Verfahren zur Filzfreiausrüstung von Wolle oder wollhaltigen Materialien.

Bekanntlich verfilzt Wolle bei wechselnder mechanischer Beanspruchung im feuchten Zustand. Da beim Verfilzen irreversible Maßänderungen (Schrumpfen) und außerdem eine Verschlechterung des Warenbildes auftreten, wird Wolle im allgemeinen mit einer Filzfreiausrüstung versehen. Zu diesem Zweck sind bereits eine Reihe von Verfahren bekannt, nämlich Chlorierungsverfahren, Oxidationsverfahren, enzymatische, alkalische Verfahren und Kunstharzverfahren. Zu letzteren zählt auch die Filzfreiausrüstung mit selbstvernetzenden Polyurethanen (PU). So beschreibt die US 3,552,910 die Verwendung von Polyarylpolyisocyanatverbindungen, die mit einem Alkohol, Thioalkohol, einer organischen Säure, einem Amin oder einem Amid modifiziert sein können, zur Behandlung von Wolle, um diese schrumpffest zu machen. Zum Aufbringen der selbstvernetzenden PUs können zwei unterschiedliche Verfahrensarten genutzt werden. Einmal das Auftragsverfahren, wobei das Wollgewebe z.B. auf einem Foulard nur kurzzeitig (< 1 min) mit der Behandlungsflotte Kontakt hat, zum anderen das Ausziehverfahren, wobei der Wollartikel z.B. auf einer Rollenkufe eine längere Zeit (> 1 min) mit der Flotte behandelt wird. Die Vernetzung des Präpolymers kann thermisch und/oder chemisch (z.B. pH-Wechsel oder Polarisationsumkehr durch Elektrolytzugabe) erfolgen.

Die GB 1,419,306 A beschreibt ein Verfahren zur Herstellung von Bisulfitadditionsprodukten von Polyisocyanaten, wobei wasserunlösliche Polyisocyanat-Präpolymere mit wenigstens zwei Isocyanatgruppen und ein Bisulfit zur Reaktion gebracht werden. Die Polyisocyanat-Präpolymere können erhalten werden durch Reaktion von Polyisocyanaten mit Hydroxylgruppen-haltigen Verbindungen, bei denen es sich um Polyether, Polyester, Polythioether, gemischte Polyester-Polyether oder gemischte Polyether-Polythioether handeln kann. Bevorzugte Hydroxylgruppen-haltige Verbindungen sind Polyether, wie auf Glycerin gestartetes Polypropylenglykol. Wesentlich für die Herstellung der Polyisocyanat-Präpolymere ist die Verwendung eines mit Wasser mischbaren organischen Lösungsmittels, wie niedrige Alkohole. Die erhaltenen Bisulfit-verkappten Polyisocyanat-Präpolymere werden zur Schrumpffestausrüstung von Wolle verwendet, indem sie auf das Gewebe aufgetragen und anschließend bei höherer Temperatur gehärtet werden.

Die DE 28 37 851 A beschreibt ebenfalls die Verwendung von Bisulfit-verkappten Polyisocyanat-Präpolymeren, die wie in der GB 1,419,306 beschrieben hergestellt werden, zur Schrumpffestausrüstung von Wolle. Die Präpolymere werden dabei durch Polarisationsumkehr auf der Gewebeoberfläche mittels Zugabe eines anorganischen Neutralsalzes zum Aufziehen auf das Gewebe gebracht.

Die Verwendung der dort beschriebenen Bisulfit-verkappten Polyisocyanat-Präpolymeren und der im Handel befindlichen Produkte, wie Synthapret BAP der BAYER AG, hat den Nachteil, dass herstellungsbedingt Lösungsmittel in der zur Anwendung kommenden Zusammensetzung enthalten sind. Außerdem hat sich in der Praxis gezeigt, dass der pH nach der Verkappungsreaktion mit Schwefeldioxid auf einen Wert von 3 eingestellt werden muss, um ein stabiles Produkt zu erhalten, wie das z.B. bei den erwähnten Handelsprodukten der Fall ist. Bei diesem pH treten Geruchsbelästigungen auf und zudem muss der pH vor der Applikation wieder erhöht werden. Ferner ist die Abluft durch die verwendeten Lösungsmittel verunreinigt und außerdem bewirken die Produkte nach der Anwendung eine deutliche Griffverhärtung der Wolle.

Diese Probleme werden grundsätzlich durch Verwendung der in der DE-A 199 19 816 beschriebenen wässrigen Zubereitungen, die ein mit Bisulfit verkapptes Polyisocyanat-Präpolymer enthalten, das im unverkappten Zustand aufgebaut ist aus:
a) 10 bis 40 Gew.-% mindestens eines Polyetherpolyols,
b) 20 bis 85 Gew.-% mindestens eines Polyesterpolyols und
c) 5 bis 30 Gew.-% mindestens eines Polyisocyanats und
d) 0 bis 30 Gew.-% mindestens einer weiteren Komponente, die mindestens eine Gruppe aufweist, welche mit Isocyanatgruppen reagieren kann,
und einen NCO-Wert im Bereich von 2,5 bis 5,0 aufweist, gelöst. Zudem zeichnen sich die dort beschriebenen Zubereitungen durch geringere Griffverhärtung der Wolle bei der Filzfreiausrüstung aus. Von Nachteil ist jedoch, dass die Lagerstabilität der dort beschriebenen Zubereitungen bei erhöhter Temperatur, d.h. bei Temperaturen von 40°C und darüber auf wenige Tage, bei Temperaturen von 50°C und darüber gar auf wenige Stunden begrenzt ist. Diese Instabilität ist insbesondere im Hinblick auf die Anwendung der Zubereitungen in Ländern mit einem wärmeren Klima als Nordeuropa nicht erwünscht. Zwar kann die Lagerstabilität teilweise durch Zugabe von Radikalinhibitoren , insbesondere von Vitamin E verbessert werden, jedoch stellt dies einen zusätzlichen Kostenfaktor dar.

Der vorliegenden Erfindung liegt daher die Aufgabe zugrunde, eine Zusammensetzung für die Filzfreiausrüstung von Wolle und wollhaltigen Materialien zur Verfügung zu stellen, die einerseits die Vorteile der in der DE-A 199 19 816 beschriebenen wässrigen Zubereitungen aufweist und die zudem bei erhöhter Temperatur eine verbesserte Lagerstabilität aufweist, ohne dass eine Stabilisierung mit Radikalinhibitoren erforderlich ist. Außerdem sollten die Zusammensetzungen bei niedrigen Temperaturen von beispielsweise unterhalb 5 °C oder bei Frost stabil bleiben.

Überraschenderweise wurde nun gefunden, dass diese Aufgabe gelöst wird, wenn man die Filzfreiausrüstung der Wolle mit einer Zusammensetzung vornimmt, die im nachfolgenden beschriebenen, mit Bisulfit verkappten Polyisocyanat-Präpolymere enthält.

Gegenstand der vorliegenden Erfindung ist daher eine wässrige Zusammensetzung, die ein mit Bisulfit verkapptes Polyisocyanat-Präpolymer umfasst, das, bezogen auf den unverkappten Zustand, aufgebaut ist aus
a) 10 bis 40 Gew.-%, vorzugsweise 10 bis 35 Gew.-% mindestens eines Polyetherpolyols;
b) 20 bis 85 Gew.-%, vorzugsweise 40 bis 80 Gew.-%, mindestens eines oligomeren Polyols, ausgewählt unter Polycarbonatpolyolen und Polycaprolactonpolyolen;
c) 5 bis 30 Gew.-%, vorzugsweise 10 bis 25 Gew.-% mindestens eines Polyisocyanats; und
d) 0 bis 30 Gew.-% einer oder mehrerer weiterer Komponenten, die mindestens eine Gruppe aufweist, welche mit Isocyanatgruppen reagieren kann,
jeweils bezogen auf das unverkappte Präpolymer und einen NCO-Wert von 2,5 bis 5,0, insbesondere 2,5 bis 4 und speziell 2,8 bis 3,4 aufweist.

Unter Polyetherolen versteht man sowohl lineare als auch verzweigte Polyether, die pro Molekül im Mittel wenigstens 2 (Hydroxylfunktionalität ≥ 2), vorzugsweise an ihren Termini angeordnete Hydroxylgruppen aufweisen. In der Regel erhält man Polyetherpolyole durch Polymerisation von Alkylenoxiden mit 2 bis 4 Kohlenstoffatomen, von Oxetan oder von Tetrahydrofuran, gegebenenfalls in Gegenwart eines Starters wie Wasser oder einem Di- oder Polyol. Als Alkylenoxid seien beispielsweise Ethylenoxid, 1,2-Propylenoxid, 1,2- und 2,3-Butylenoxid, insbesondere Ethylenoxid und Propylenoxid genannt. Als Startermolekül kommen z. B. Wasser sowie niedermolekulare Dioder Polyole in Betracht. Beispiele für geeignete Starter sind bifunktionelle Alkohole, z.B. Alkandiole mit 2 bis 10 C-Atomen wie Ethandiol, 1,2- und 1,3-Propandiol, 1,4-Butandiol, Bisphenol A, cycloaliphatische Diole, z.B. Cylohexan-1,4-diol, 1,4-Bis(hydroxymethyl)cyclohexan oder 2,2-Bis(4-hydroxycyclohexyl)propan, und polyfunktionelle Alkohole mit mehr als 2 OH-Gruppen wie Glycerin, Trimethylolpropan, Pentaerythrit, sowie Zuckeralkohole wie Sorbit. Polyetherpolyole mit nur zwei Hydroxylgruppen (Hydroxylfunktionalität = 2) erhält man bei der Verwendung von bifunktionellen Startern. Dementsprechend erhält man Polyetherpolyole mit einer höheren Hydroxylfunktionalität durch Verwendung von Alkoholen mit mehr als 2 Hydroxylgruppen als Starter. Bevorzugte Polyetherpolyole sind lineares oder ein verzweigtes aliphatisches Polyetherpolyole, insbesondere lineare Poly-C₂-C₄-alkylenoxide bzw. Poly-C₂-C₄-alkylenglykole oder verzweigte Poly-C₂-C₄-alkylenoxide. Besonders bevorzugt sind lineare oder verzweigte Polyethylenoxide, Polypropylenoxide sowie lineare oder verzweigte Poly(ethylenoxid/propylenoxid)copolymere.

Das mittlere Molekulargewicht (Zahlenmittel) des Polyetherpolyols liegt vorzugsweise im Bereich von 400 bis 4000, insbesondere 500 bis 3000 und speziell 800 bis 2000. Die Hydroxylfunktionalität liegt im allgemeinen im Bereich von 2 bis 4, vorzugsweise im Bereich von 2 bis 3. Der Begriff Hydroxylfunktionalität bezeichnet hierbei die mittlere Anzahl an Hydroxylgruppen pro Molekül.

In einer besonders bevorzugten Ausführungsform der Erfindung handelt es sich bei der Komponente a) um ein lineares oder verzweigtes Poly-C₂-C₄-alkylenoxid mit einem Molekulargewicht im Bereich von 400 bis 4000, insbesondere 500 bis 3000 und speziell 800 bis 2000 sowie einer Hydroxylfunktionalität von 2 bis 4, insbesondere 2 bis 3.

Als Komponente b) werden erfindungsgemäß Polycarbonatpolyole und/oder Polycaprolactonpolyole eingesetzt. Unter Polycarbonatpolyolen versteht man solche Polycarbonate, also Polymere bzw. Oligomere, die im wesentlichen, i.d.R. zu mehr als 80 Gew.-%, vorzugsweise mehr als 90 Gew.-%, Wiederholungseinheiten der allgemeinen Formel I 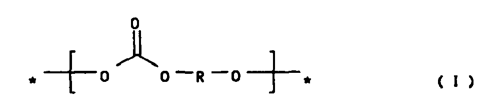 aufweisen, und die pro Molekül im Mittel wenigstens 2, z.B. 2, 3, 4 oder 5, vorzugsweise an ihren Termini angeordnete Hydroxylgruppen aufweisen. In Formel I steht R für einen bivalenten organischen Rest, der in der Regel 2 bis 20 Kohlenstoffatome aufweist und durch ein oder mehrere z.B. 1, 2, 3 oder 4 nicht benachbarte Sauerstoffatome unterbrochen sein kann. R leitet sich vorzugsweise von einem aliphatischen oder cycloaliphatischen Diol ab. Derartige Polycarbonatpolyole werden üblicherweise als aliphatische Polycarbonatpolyole bezeichnet. Beispiele für geeignete aliphatische Diole sind lineare oder verzweigte Alkylenglykole mit 2 bis 20, vorzugsweise 2 bis 10 C-Atomen, z.B. lineare Alkylenglykole der Formel HO-(CH₂)ₙ-OH mit n = 2, 3, 4, 5, 6, 7 oder 8, vorzugsweise 3, 4, 5, 6 oder 7, Alkyl-substituierte α,ω-Alkandiole mit 3 bis 20 C-Atomen wie Propylenglykol, Neopentylglykol und dergleichen, Oligomere wie Di- Tri- und Tetraethylenglycol, Di-, Tri- und Tetrapropylenglykol, HO-((CH₂)₄O)ₘH mit m = 2, 3, 4 oder 5, weiterhin cycloaliphatische Diole, z.B. Cylohexan-1,4-diol, 1,4-Bis(hydroxymethyl)cyclohexan oder 2,2-Bis(4-hydroxycyclohexyl) propan.

Das Polycarbonatpolyol kann auch eine oder mehrere, z.B. 1, 2 oder 3 Verzweigungstellen aufweisen, die sich von mehrwertigen Alkohlen, wie Glycerin, Trimethylolpropan, Pentaerythrit, oder von Zuckeralkoholen wie Sorbit ableiten. In Abhängigkeit von der Anzahl der Verzweigungsstellen und der Funktionalität des Alkohols weist das resultierende Polycarbonatpolyol eine Hydroxylfunktionalität > 2 auf.

Unter Polycaprolactonpolyolen versteht man Oligomere bzw. Polymere, die durch ringöffnende Polymerisation von Caprolacton in Gegenwart 2- oder mehrwertiger Alkohole erhältlich sind. Geeignete 2- oder mehrwertige Alkohole sind die bei den Polycarbonatpolyolen erwähnten aliphatischen und cycloaliphatischen Diole, insbesondere 1,4-Butandiol, 1,6-Hexandiol, Neopentylglykol, Diethylenglykol sowie die dort genannten mehrwertigen Alkohole. Polycaprolactondiole sind bekannt und unter den Handelsbezeichnungen CAPA® der Fa. Solvay S.A. im Handel erhältlich.

Das mittlere Molekulargewicht (Zahlenmittel) der Komponente b) liegt im allgemeinen im Bereich von 500 bis 6000, vorzugsweise 700 bis 4000, speziell 800 bis 3000. Die Hydroxylfunktionalität der Komponente b) liegt im allgemeinen im Bereich von 2 bis 4, vorzugsweise 2 bis 3.

In besonders bevorzugten Ausführungsformen der Erfindung verwendet man als Komponente b) ein Polycarbonatpolyol mit einer Hydroxylfunktionalität von 2 bis 4, insbesondere ein Polycarbonatdiol, das von einem Alkandiol der Formel HO-(CH₂)ₙ-OH mit n = 3, 4, 5, 6 oder 7, insbesondere von 1,6-Hexandiol oder von 1,4-Bis(hydroxymethyl)cyclohexan abgeleitet ist. In Formel I steht dementsprechend R für (CH₂)ₙ mit n = 3, 4, 5, 6 oder 7 oder für einen Rest der Formel:

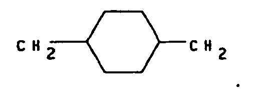

In anderen, ebenfalls besonders bevorzugten Ausführungsformen verwendet man als Komponente b) ein Polycaprolactondiol.

Bei dem Polyisocyanat der Komponente c) handelt es sich vorzugsweise um ein Diisocyanat. Es können aromatische oder aliphatische (bzw. cycloaliphatische) Diisocyanate zur Anwendung kommen. Brauchbare aromatische Diisocyanate sind 2,4-Toluoldiisocyanat, 2,6-Toluoldiisocyanat und Gemische davon sowie 4,4'-Diphenylmethandiisocyanat. Geeignete aliphatische Diisocyanate sind Isophorondiisocyanat, Cyclohexan-1,4-diisocyanat und 4,4'-Methylen-bis(cyclohexylisocyanat). Bevorzugt sind aliphatische Diisocyanate der Formel

OCN-(CH₂)ₙ-NCO,

worin n für 2 bis 8, insbesondere 4 bis 8, steht. Besonders bevorzugt sind dabei Tetramethylendiisocyanat und insbesondere Hexamethylendiisocyanat. Geeignet sind aber auch höherfunktionelle Isocyanate, z.B. die Biurete und Cyanurate der vorgenannten Diisocyanate, sowie deren Mischungen mit Diisocyanaten.

Bei der weiteren Komponente d) handelt es sich in der Regel um Verbindungen mit mindestens einer, z.B. 1, 2 oder 3 Hydroxyl-, Amino- oder Mercaptogruppen. Beispiele sind Monoalkohole mit vorzugsweise 1 bis 4 C-Atomen wie Methanol, Ethanol etc.; niedermolekulare Diole mit vorzugsweise 2 bis 10 C-Atomen wie Ethylenglykol, Propylenglykol; Mono- oder Diamine mit vorzugsweise 2 bis 10 C-Atomen wie 1,6-Hexandiamin, Ethylendiamin etc.; Aminoalkohole mit vorzugsweise 2 bis 10 C-Atomen wie Aminoethanol, 2-Aminomethylpropanol, Thiole, wie Butylmercaptan etc.

Die Komponente d) kommt beispielsweise in einer Menge von mindestens 0,1 Gew.-% und insbesondere 0,5 bis 20 Gew.-% zur Anwendung. In einer bevorzugten Ausführungsform der Erfindung wird weniger als 0,5 Gew.-% und insbesondere keine, d.h. weniger als 0,1 Gew.-, Komponente d) zur Herstellung des Präpolymeren eingesetzt.

Die Herstellung der Polyisocyanat-Präpolymere erfolgt in der Regel durch gleichzeitige Umsetzung der Komponenten, ohne Verwendung eines Lösungsmittels. Die Umsetzung erfolgt in der Regel bei erhöhter Temperatur, insbesondere bei einer Temperatur im Bereich von 60 bis 120°C. Die Umsetzung wird dabei soweit geführt, bis der oben genannte NCO-Wert erreicht ist. Unter dem NCO-Wert versteht man den Gewichtsanteil der freien Isocyanat-Gruppen im Präpolymer. Der NCO-Wert kann in an sich bekannter Weise bestimmt werden (DIN 53185 Isocyanatharze-Prüfung). Dabei wird das Mengenverhältnis der Komponenten a) bis c), und gegebenenfalls d) vorzugsweise so gewählt, dass bei Erreichen des NCO-Wertes wenigstens 50 % der Isocyanat-Gruppen abreagiert sind. Der Anteil der nicht abreagierten Isocyanat-Gruppen ergibt sich aus dem NCO-Wert.

Sobald der gewünschte NCO-Wert erreicht ist, wird das Reaktionsgemisch abgekühlt, jedoch nur so weit, dass es noch als Schmelze vorliegt. Das Polyisocyanat-Präpolymer wird anschließend in Form der Schmelze in einer wässrigen Bisulfitlösung dispergiert, wobei man das Bisulfit-verkappte Präpolymer erhält.

Als Bisulfit verwendet man insbesondere ein Alkali- oder Erdalkalimetallbisulfit, beispiele Natrium- oder Kaliumbisulfit. Im allgemeinen wird das Bisulfit, bezogen auf die NCO-Zahl des Präpolymers, im Überschuss eingesetzt. Vorzugsweise verwendet man einen Überschuss von 10 bis 80 Mol-%, insbesondere 10 bis 40 Mol-%, Bisulfit.

Neben Bisulfit kann die wässrige Bisulfit-Lösung auch Sulfit, z.B. in Form des Alkalimetallsulfits enthalten. Der Anteil an Sulfit (gerechnet als SO₃) liegt in der Regel im Bereich von 0,1 bis 10 Gew.-%, bezogen auf die Gesamtmenge an Sulfit + Bisulfit (gerechnet als HSO₃) und liegt insbesondere im Bereich von 0,5 bis 5 Gew.-%.

Die Konzentration der Bisulfitlösung liegt im allgemeinen im Bereich von 1 bis 20, vorzugsweise 2,5 Gew.-% bis 10 Gew.-%, vorzugweise 2,8 Gew.-% bis 8 Gew.-%.

Das Bisulfit wird in der Regel in Form einer wässrigen Lösung vorgelegt, in welcher die Schmelze des Polyisocyanat-Präpolymers dispergiert wird. Die Dispergierung erfolgt in üblicher Weise, beispielsweise unter Verwendung eines schnelllaufenden Rührers oder eines Ultra-Turrax.

Die Umsetzung der Bisulfitlösung mit dem Polyisocyanat-Präpolymer erfolgt bei möglichst niedriger Temperatur, im allgemeinen bei einer Temperatur von weniger als 50°C, insbesondere nicht mehr als 40°C und speziell im Bereich von 30 bis 40°C. Die Temperatur liegt vorzugsweise mindestens etwa 5 bis 10°C oberhalb des Erstarrungsbereichs des unverkappten Polyisocyanatpräpolymers.

Die Umsetzung ist beendet, wenn beispielsweise mittels IR-Spektroskopie keine Isocyanatgruppen mehr nachgewiesen werden können. Der pH-Wert der Dispersion wird nach beendeter Umsetzung auf einen Wert im Bereich von 5 bis 7, insbesondere 5 bis 6, eingestellt, beispielsweise durch Zugabe von Alkalimetallsulfit- oder Alkalimetallbisulfitlösung.

Überraschenderweise hat sich gezeigt, dass die erhaltene Dispersion im Gegensatz zu den Produkten des Standes der Technik auch bei erhöhter Temperatur, d.h. oberhalb 40°C über einen Zeitraum von mehreren Monaten und sogar bei 50°C Mindestens 1 Woche lagerstabil ist. Insbesondere zeigen die erfindungsgemäßen wässrigen Zusammensetzungen nach Lagerung keine oder nur eine geringe unerwünschte Viskositätszunahme und erfüllen auch nach Lagerung bei erhöhter Temperatur den IWS-Standard TM 31, das heißt, die Zusammensetzungen zeigen nach Lagerung bei erhöhter Temperatur keine oder keine nennenswerten Nachteile bei ihrer erfindungsgemäßen Verwendung. Es ist weder erforderlich, Schwefeldioxid zur pH-Erniedrigung einzuleiten, so dass die Geruchsbelästigung bei den erfindungsgemäßen Zusammensetzung erheblich verringert ist, noch ist die Zugabe eines Radikalinhibitor notwendig. Zudem werden bei der Verwendung der erfindungsgemäßen Zusammensetzungen die vorteilhaften Eigenschaften der in DE-A 199 19 816 beschriebenen Zubereitungen erreicht. Zudem zeichnen sich die erfindungsgemäßen Zusammensetzungen durch eine hohe Stabilität bei niedrigen Temperaturen von beispielsweise unterhalb 5 °C, z.B. 0 bis 5 °C sowie bei Frosteinwirkung aus.

Selbstverständlich kann die erfindungsgemäße Zusammensetzung zusätzlich auch einen Radikalinhibitor enthalten. Dabei handelt es sich vorzugsweise um sterisch gehinderte Phenole, Hydrochinone, Aniline und Phosphite (Antioxydantien). Beispiele sind Di-t-butylhydrochinon, sowie die Irganox- und Irgafos-Typen, Chimassorb- und Tinuvin-Typen der Fa. Ciba, wie Irganox 245, 1010, 1035, 1076, 1098, 5057, Irgafors 168, Irgafos TNPP, TPP und DDPP, Chimassorb 119 und 944, Tinuvin 123, 144, 770 und 791. Bevorzugt verwendet man ein Tocopherol und besonders bevorzugt Vitamin E (α-Tocopherol). Vorzugsweise wird der Radikalinhibitor nach der Herstellung des Polyisocyanat-Präpolymers zugegeben. Die Menge an Radikalinhibitor beträgt, sofern erwünscht, im allgemeinen 0,05 bis 5 Gew.-%, vorzugsweise 0,1 bis 3 Gew.-%, bezogen auf das Polyisocyanat-Präpolymer. Die Verwendung von Radikalinhibitoren ist jedoch grundsätzlich zur Stabilisierung der erfindungsgemäßen Zubereitungen nicht erforderlich, so dass eine Ausführungsform der Erfindung solche Zusammensetzungen betrifft, die keine, d.h. weniger als 0,05 Gew.-%, Radikalinhibitoren enthalten.

Zur Anwendung wird eine Flotte zubereitet, indem die erfindungsgemäßen Zusammensetzungen mit Wasser auf einen Gehalt von 20 bis 200 g, vorzugsweise 30 bis 100 g und insbesondere 50 bis 90 g des verkappte Isocyanatgruppen-enthaltenden Präpolymers pro Liter Flotte verdünnt werden. Außerdem kann die Flotte übliche Zusätze und Hilfsmittel enthalten, wie Tenside, Entschäumer, Netzmittel, Entlüfter, Weichmacher etc.

Gewünschtenfalls wird der pH auf einen Wert im Bereich von 4 bis 9, vorzugsweise 5 bis 8 mit einer Säure, wie HCl, NaHSO₃ etc. oder einer Base, wie NaOH, eingestellt.

Das zu behandelnde Gewebe aus Wolle oder wollhaltigem Material wird dann mit der Flotte in üblicher Weise getränkt, beispielsweise nach dem eingangs erwähnten Auftragsverfahren mit Hilfe üblicher Imprägniervorrichtungen, wie einem Foulard. Nach dem Tränken wird das Gewebe auf eine Flottenaufnahme von etwa 30 bis 120% abgequetscht und das abgequetschte Gewebe wird anschließend einer Wärmebehandlung bei einer Temperatur im Bereich von 100 bis 190°C, vorzugsweise 120 bis 180°C und insbesondere 140 bis 180°C, unterworfen. Durch die Wärmebehandlung wird das Gewebe getrocknet und gleichzeitig wird das verkappte Präpolymer gehärtet, d.h. es erfolgt eine Vernetzung des Präpolymers mit den Wollfasern. Die Zeitdauer der Wärmebehandlung richtet sich nach der Konzentration der Flotte, der Flottenaufnahme und der Behandlungstemperatur. Im allgemeinen erfolgt die Wärmebehandlung während einer Zeitdauer von 10 bis 300 sec, insbesondere 30 bis 160 sec.

Eine andere Möglichkeit, das verkappte Präpolymer auf Wolle aufzubringen, ist eine Flotte mit Wasser anzusetzen, in der 2 - 6 Gew.-% (bezogen auf die Masse des auszurüstenden Wollartikels) des verkappten Isocyanatgruppen-enthaltenden Präpolymers enthalten sind. Der Wollartikel wird über einen Zeitraum von 10-60 min, insbesondere von 15-30 min, mit der Behandlungsflotte in hierfür geeigneten Ausrüstungsaggregaten (z.B. Haspelkufe; Rollenkufe; Paddel; etc.) durchtränkt und danach wie oben angegeben abgequetscht.

Das Aufziehen des verkappten Präpolymers, sowie das gleichzeitige Vernetzen kann auch durch alkalische pH-Einstellung in dem Bereich von pH 7,1-12,0, insbesondere von pH 8,0-10,0 und/oder durch Polarisationsumkehr der Wolloberfläche (Umkehr des negativen Zetapotential in ein positives) durch entsprechende Elektrolytzugabe, insbesondere von Alkali- und Erdalkaliverbindungen, wie Natriumsulfat, Natriumchlorid, Magnesiumsulfat, Magnesiumchlorid etc., erfolgen.

Mit der erfindungsgemäßen Zusammensetzung bzw. der Flotte lassen sich Wolle und wollhaltige Materialien, d.h. Gemische von Wolle und anderen Textilfasern, wie Baumwolle, Polyester, Polyamid etc., behandeln. Die Behandlung kann auf jeder Verarbeitungsstufe und -art vorgenommen werden, z.B. als Kammzug, Garn, Gewebe, Gewirke oder fertige Textilien.

Die auf diese Weise behandelten Gewebe besitzen eine waschpermanente Filzfreiausrüstung, d.h. es ist ein nur sehr geringer Kettschrumpf und Schussschrumpf zu beobachten. Insbesondere werden die verschiedenen IWS-Standards für Gewebe, Gewirke, Textilien etc. (z.B. TM31 für Gewebe) auch nach Lagerung der Zusammensetzung bei erhöhter Temperatur erfüllt. Außerdem hat sich gezeigt, dass die Gewebe einen relativ weichen Griff auch ohne Verwendung zusätzlicher Weichmacher in der Flotte besitzen.

Die nachfolgenden Beispiele erläutern die Erfindung, ohne sie zu begrenzen.

### Herstellungsbeispiele:

Zur Bestimmung der Lagerstabilität wird eine Probe der Zusammensetzung für einen definierten Zeitraum (z.B. 100 h) bei einer definierten Temperatur (z.B. 40 °C, 50 °C oder 55 °C) gelagert. Anschließend wird die Viskosität überprüft und mit der Viskosität der Probe vor Lagerung verglichen. Eine Probe gilt als nicht lagerstabil, wenn die Viskosität sich merklich verändert, beispielsweise die Produktspezifikation nicht erreicht wird. Eine Probe gilt ebenfalls als nicht lagerstabil, wenn bei erfindungsgemäßer Verwendung der gelagerten Probe der IWS-Standard TM 31 nicht mehr erfüllt wird.

### Beispiel 1:

a) 170 g Polyethylenglykol (MW = 1.500, Funktionalität = 3, Simulsol TO300/E der Firma Seppic), 685 g aliphatisches Polycarbonatdiol auf Basis von 1,6-Hexandiol (MW = 2000, Funktionalität = 2, Carb UH 200 der Fa. UBE-Europe GmBH), 145 g Hexamethylendiisocyanat wurden bei 85°C zur Reaktion gebracht bis 58 % der Isocyanatgruppen abreagiert haben (NCO-Wert = 3,0) .
b) Nach Abkühlen der Schmelze wird diese in 2,4 kg einer 3,2 %igen wässrigen Natriumbisulfitlösung, die zugleich 12 g Natriumsulfit enthält, einemulgiert. Die wässrige Phase wird zunächst 2 h bei 40 bis 50°C und dann bei Raumtemperatur 12 Stunden gerührt, bis die Umsetzung des Sulfits mit dem Isocyanat vollständig abgelaufen ist. Der pH-Wert wurde am Ende der Reaktionszeit auf den Wert von 5.6 eingestellt.

Die erhaltene Dispersion weist bei 50°C eine Lagerstabilität von mehr als 100 h auf.

### Vergleichsbeispiel 1 (nach DE-A 19919816)

Die Reaktion wurde wie in Beispiel 1 durchgeführt mit dem Unterschied, dass in Schritt a) anstelle des Polycarbonatdiols ein aliphatisches Polyesterdiol auf Basis von Adipinsäure, Diethylenglykol und Trimethylolpropan (MW = 2500, Funktionalität = 2,6; Lupraphen 8190 der Fa. Elastogran GmbH, Lemförde) verwendet wird.

Die erhaltene Dispersion zeigt bereits nach 4 h bei 50°C Anzeichen einer irreversiblen Vernetzung.

### Beispiel 2:

Entsprechend Beispiel 1 wurden folgende Rohstoffmengen umgesetzt: 250 g Polyetherpolyol (Polyethylenglykol: MW 1500, Funktionalität 3, Simulsol TO 300/E der Fa. Seppic), 540 g Polycarbonatdiol auf Basis von 1,6-Hexandiol (MW 1000, Funktionalität 2, Carb UH 100 der Fa. UBE-Europe GmbH) und 210 g Hexamethylendiisocyanat. Die Umsetzung in Schritt a) wurde bis zum 58 %-igen Umsatz der Isocyanatgruppen geführt. Die NCO-Zahl betrug 3,9. Anschließend fürhte man Schritt b) in der für Beispiel 1 beschriebenen Weise durch.

Die erhaltene Dispersion weist bei 50°C eine Lagerstabilität von mehr als 100 h auf.

### Beispiel 3

Die Reaktion wurde wie in Beispiel 1 durchgeführt mit dem Unterschied, dass in Schritt a) anstelle des Polycarbonatdiols ein Polycaprolactondiol (MW = 2000, Funktionalität = 2: CAPA 2201 A der Fa. Solvay Caprolactones, Warrington UK) verwendet wird. Die Umsetzung in Schritt a) wurde bis zum 58 %-igen Umsatz der Isocyanatgruppen geführt. Die NCO-Zahl betrug 3,0.

Die erhaltene Dispersion weist bei 50°C eine Lagerstabilität von mehr als 100 h auf.

### Beispiel 4:

Entsprechend Beispiel 1 wurden in Schritt a) folgende Rohstoffmengen umgesetzt: 165 g Polyetherpolyol (MW = 1.500, Funktionalität = 3, Simulsol TO 300/E der Firma Seppic), 655 g Polycaprolactondiol (MW = 2000, Funktionalität = 2: CAPA 2201 A der Fa. Solvay Caprolactones, Warrington UK) und 180 g Isophorondiisocyanat. Die Umsetzung in Schritt a) wurde bis zum 58,3 %-igen Umsatz der Isocyanatgruppen geführt. Die NCO-Zahl betrug 2,85. Anschließend wurde Schritt b) in der für Beispiel 1 beschrienen Weise durchgeführt.

Die erhaltene Dispersion weist bei 50°C eine Lagerstabilität von mehr als 100 h auf.

### Beispiel 5

Die Reaktion wurde wie in Beispiel 1 durchgeführt mit dem Unterschied, dass der in Schritt a) erhaltenen Schmelze vor dem Emulgieren in der wässrigen Bisulfit-Lösung 5 g Vitamin E zugesetzt wurden.

Die erhaltene Dispersion weist bei 50°C eine Lagerstabilität von mehr als 100 h auf.

### Beispiel 6

Die Reaktion wurde wie in Beispiel 1 durchgeführt mit dem Unterschied, dass der in Schritt a) erhaltenen Schmelze vor dem Emulgieren in der wässrigen Bisulfit-Lösung 5 g Vitamin E zugesetzt wurden und die wässrige Bisulfit-Lösung 10 Gew.-% 2-Propanol enthielt.

Die erhaltene Dispersion weist bei 50°C eine Lagerstabilität von mehr als 100 h auf.

### Beispiel 7:

a) 296 g Polyethylenglykol (MW = 1.500, Funktionalität = 3, Simulsol TO300/E der Firma Seppic), 551 g aliphatisches Polycarbonatdiol auf Basis von 1,6-Hexandiol (MW = 2000, Funktionalität = 2, Carb UH 200 der Fa. UBE-Europe GmBH), 153 g Hexamethylendiisocyanat wurden bei 75°C zur Reaktion gebracht bis 54 % der Isocyanatgruppen abreagiert haben (NCO-Wert = 3,5).
b) Nach Abkühlen der Schmelze wird diese in 2,4 kg einer 3,2 %igen wässrigen Natriumbisulfitlösung, die zugleich 12 g Natriumsulfit enthält, einemulgiert. Die wässrige Reaktionsmischung wird bei Raumtemperatur 12 Stunden gerührt, bis die Umsetzung des Sulfits mit dem Isocyanat vollständig abgelaufen ist.

Die erhaltene Dispersion weist bei 50°C eine Lagerstabilität von mehr als 100 h und bei 2°C von 3 Monaten auf.

### Beispiel 8:

Entsprechend Beispiel 1 wurden folgende Rohstoffmengen umgesetzt: 373 g Polyetherpolyol (Polyethylenglykol: MW 1500, Funktionalität 3, Simulsol TO 300/E der Fa. Seppic), 472 g Polycarbonatdiol auf Basis von 1,6-Hexandiol (MW 1000,

Funktionalität 2, Carb UH 100 der Fa. UBE-Europe GmbH) und 155 g Hexamethylendiisocyanat. Die Umsetzung in Schritt a) wurde bis zum 55 %-igen Umsatz der Isocyanatgruppen geführt. Die NCO-Zahl betrug 3,5. Anschließend führte man Schritt b) in der für Beispiel 1 beschriebenen Weise durch.

Die erhaltene Dispersion weist bei 50°C eine Lagerstabilität von mehr als 100 h und bei 2°C von 3 Monaten auf.

### Beispiel 9:

Entsprechend Beispiel 1 wurden folgende Rohstoffmengen umgesetzt: 315 g Polyetherpolyol (Polyethylenglykol: MW 1500, Funktionalität 3, Simulsol TO 300/E der Fa. Seppic), 532 g Polycarbonatdiol auf Basis von 1,6-Hexandiol (MW 2000, Funktionalität 2, Carb UH 200 der Fa. UBE-Europe GmbH) und 152 g Hexamethylendiisocyanat. Die Umsetzung in Schritt a) wurde bis zum 54 %-igen Umsatz der Isocyanatgruppen geführt. Die NCO-Zahl betrug 3,5. Anschließend führte man Schritt b) in der für Beispiel 1 beschriebenen Weise durch.

Die erhaltene Dispersion weist bei 50°C eine Lagerstabilität von mehr als 100 h und bei 2°C von 3 Monaten auf.

### Beispiel 10:

Entsprechend Beispiel 1 wurden folgende Rohstoffmengen umgesetzt: 315 g Polyetherpolyol (Polyethylenglykol: MW 1500, Funktionalität 3, Simulsol TO 300/E der Fa. Seppic), 532 g Polycarbonatdiol auf Basis von 1,6-Hexandiol (MW 2000, Funktionalität 2, Carb UH 200 der Fa. UBE-Europe GmbH), 152 g Hexamethylendiisocyanat und 0,25 g 70-%ige Phosphorsäure. Die Umsetzung in Schritt a) wurde bis zum 54 %-igen Umsatz der Isocyanatgruppen geführt. Die NCO-Zahl betrug 3,5. Anschließend führte man Schritt b) in der für Beispiel 1 beschriebenen Weise durch.

Die erhaltene Dispersion weist bei 50°C eine Lagerstabilität von mehr als 100 h und bei 2°C von 3 Monaten auf.

### Anwendungsbeispiele

### Anwendungsbeispiel 1

Die Dispersion aus Beispiel 1 wurde mit kaltem Wasser auf eine Konzentration von 40 g/l verdünnt und mit Natriumhydrogencarbonat auf pH 7,0 eingestellt. Desweiteren wurde dieser Flotte 1 g/l eines nichtionogenen Netzmittels auf Basis eines Phosphorsäureesters zugegeben. Mit dieser Flotte wurde in einem Foulardchassis ein mittelschweres Wollgewebe getränkt, welches von dem Foulardquetschwerk auf eine Flottenaufnahme von 70 % abgequetscht wurde. Anschließend wurde dieses mit der Behandlungsflotte durchnetzte Wollgewebe spannungslos auf einen Spannrahmen bei 160°C getrocknet. Die Verweilzeit im Spannrahmen betrug 120 s.

Das so ausgerüstete Wollgewebe wies nach dem Testwaschprogramm des IWS (Internationales Woll-Sekretariat) für die Superwash-Ausrüstung (siehe TM 31 des IWS Stand: Juli 1996, diese basiert auf der ISO 6330) einen Kettschrumpf von 0,0 % und einen Schußschrumpf von -1,2 % auf. Das gleiche Wollgebe weist ohne Ausrüstung mit dem Produkt einen Kettschrumpf von -25,7 % und einen Schußschrumpf von -30,0 % auf.

### Anwendungsbeispiele 2 bis 14, Vergleichsbeispiel V15:

Die Durchführung der Anwendungsbeispiele 2 bis 14 erfolgte nach der für Anwendungsbeispiel 1 angegebenen Methode, wobei abweichend von Anwendungsbeispiel 1 die Flotte eine andere Konzentration, einen anderen pH-Wert und/oder ein anderes Produkt enthielt. Die jeweiligen Parameter der Flotte sowie die Ergebnisse der anwendungstechnischen Prüfung sind in Tabelle 1 angegeben.

**Tabelle 1:**

| Nr. | Produkt | c* [g/l] | pH⁺ | Schrumpf [%] | |
|---|---|---|---|---|---|
| | | | | Kette | Schuß |
| 2 | Beispiel 1 | 60 | 7,2 | 0,0 | 0,0 |
| 3 | Beispiel 1 | 40 | 6,5 | 0,0 | 0,0 |
| 4 | Beispiel 1 | 40 | 9,5 | -0,05 | 0,0 |
| 5 | Beispiel 1 nach 72 h bei 50°C | 40 | 7,2 | 0,0 | -0,5 |
| 6 | Beispiel 1 nach 30 d bei 40 °C | 40 | 7,2 | 0,0 | -0,7 |
| 7 | Beispiel 2 | 60 | 7,2 | -0,03 | -1,2 |
| 8 | Beispiel 3 | 60 | 7,2 | -0,24 | -1,2 |
| 9 | Beispiel 4 | 60 | 7,2 | -0,1 | -0,02 |
| 10 | Beispiel 5 | 60 | 7,2 | 0,0 | 0,0 |
| 11 | Beispiel 6 | 60 | 7,2 | 0,0 | 0,0 |
| 12 | Beispiel 7 | 60 | 7,2 | 0,0 | 0,0 |
| 13 | Beispiel 8 | 60 | 7,2 | 0,0 | 0,0 |
| 14 | Beispiel 9 | 60 | 7,2 | 0,0 | 0,0 |
| V15 | Vergleichsbeispiel 1 | 60 | 7,0 | -2,8 | -3,5 |

| | | | | | |
|---|---|---|---|---|---|
| * Konzentration der Flotte | | | | | |
| + pH-Wert der Flotte | | | | | |

Die Ergebnisse zeigen, dass die anwendungstechnischen Eigenschaften der erfindungsgemäßen Zusammensetzungen denen des Standes der Technik zumindest vergleichbar, wenn nicht gar überlegen sind. Zudem werden die anwendungstechnischen Eigenschaften auch durch Lagerung bei erhöhter Temperatur nicht oder nur unwesentlich nachteilig beeinflusst.

## Patentansprüche

1. Wässrige Zusammensetzung, umfassend ein mit Bisulfit verkapptes Polyisocyanat-Präpolymer, das, bezogen auf den unverkappten Zustand, aufgebaut ist aus
a) 10 bis 40 Gew.-% mindestens eines Polyetherpolyols als Komponente a);
b) 20 bis 85 Gew.-% mindestens eines oligomeren Polyols als Komponente b), die ausgewählt ist unter Polycarbonatpolyolen und Polycaprolactonpolyolen;
c) 5 bis 30 Gew.-% mindestens eines Polyisocyanats als Komponente c); und
d) 0 bis 30 Gew.-% einer oder mehrerer weiterer Komponenten d), die mindestens eine Gruppe aufweist, welche mit Isocyanatgruppen reagieren kann,
jeweils bezogen auf das unverkappte Präpolymer, und einen NCO-Wert im Bereich von 2,5 bis 5,0 aufweist.

2. Zusammensetzung nach Anspruch 1, wobei das Polyisocyanat-Präpolymer aufgebaut ist aus
a) 10 bis 35 Gew.-% Komponente a),
b) 40 bis 80 Gew.-% Komponente b) und
c) 10 bis 25 Gew.-% Komponente c).

3. Zusammensetzung nach Anspruch 1 oder 2, wobei es sich bei dem Polyetherpolyol um ein lineares oder verzweigtes Poly-C₂-C₄-alkylenglykol mit einem Molekulargewicht im Bereich von 400 bis 4000 und einer Hydroxylfunktionalität von 2 bis 4 handelt.

4. Zusammensetzung nach einem der vorhergehenden Ansprüche, wobei es sich bei der Komponente b) um ein Polycarbonatpolyol handelt, das im wesentlichen aus Wiederholungseinheiten der allgemeinen Formel I 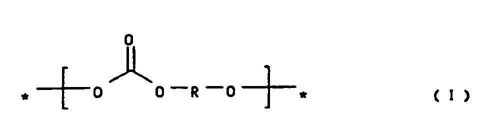 aufgebaut ist, worin R für -(CH₂)ₙ mit n = 3, 4, 5, 6 oder 7 oder für einen Rest der Formel: 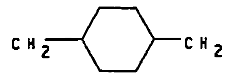 steht, und das eine Hydroxylfunktionalität im Bereich von 2 bis 4 aufweist.

5. Zusammensetzung nach einem der vorhergehenden Ansprüche, wobei es sich bei der Komponente b) um ein Polycaprolactondiol handelt.

6. Zusammensetzung nach einem der vorhergehenden Ansprüche, wobei es sich bei dem Polyisocyanat um ein Diisocyanat der Formel
OCN-(CH₂)ₙ-NCO,
worin n für 2 bis 8 steht, oder Isophorondiisocyanat handelt.

7. Zusammensetzung nach einem der vorhergehenden Ansprüche, wobei das verkappte Polyisocyanat-Präpolymer erhältlich ist durch Umsetzung der Komponenten a) bis d) zu dem entsprechenden Präpolymer mit freien Isocyanatgruppen und Dispergieren des Präpolymers in einer wässrigen Bisulfitlösung.

8. Zusammensetzung nach Anspruch 7, wobei die Bisulfitlösung eine Konzentration im Bereich von 3 bis 30 Gew.-% aufweist.

9. Zusammensetzung nach einem der vorhergehenden Ansprüche in Form einer wässrigen Dispersion mit einem pH-Wert im Bereich von 5 bis 7.

10. Zusammensetzung nach einem der vorhergehenden Ansprüche, die im wesentlichen frei von einem organischen Lösungsmittel ist.

11. Verfahren zur Filzfreiausrüstung von Wolle oder wollhaltigen Materialien, wobei man auf die Wolle oder die wollhaltigen Materialien eine Zusammensetzung nach einem der Ansprüche 1 bis 10 aufbringt und anschließend einer Wärmebehandlung bei 100 bis 190°C unterwirft.

12. Verfahren nach Anspruch 11, **dadurch gekennzeichnet, daß** die Wärmebehandlung während einer Zeitdauer von 10 s bis 300 s erfolgt.

## Claims

1. An aqueous composition comprising a bisulphite-blocked polyisocyanate prepolymer which, based on the unblocked state, is constructed from
a) from 10 to 40% by weight of at least one polyetherpolyol as component a);
b) from 20 to 85% by weight of at least one oligomeric polyol as component b) which is selected from polycarbonatepolyols and polycaprolactonepolyols;
c) from 5 to 30% by weight of at least one polyisocyanate as component c); and
d) from 0 to 30% by weight of one or more further components d) which have at least one group which is capable of reacting with isocyanate groups,
each percentage being based on the unblocked prepolymer, and has an NCO value in the range from 2.5 to 5.0.

2. A composition as claimed in claim 1, wherein the polyisocyanate prepolymer is constructed from
a) from 10 to 35% by weight of component a),
b) from 40 to 80% by weight of component b), and
c) from 10 to 25% by weight of component c).

3. A composition as claimed in claim 1 or 2, wherein the polyetherpolyol is a linear or branched poly-C₂-C₄-alkylene glycol_ having a molecular weight in the range from 400 to 4000 and a hydroxyl functionality in the range from 2 to 4.

4. A composition as claimed in any preceding claim, wherein component b) is a polycarbonatepolyol which is constructed essentially of repeat units of the general formula I 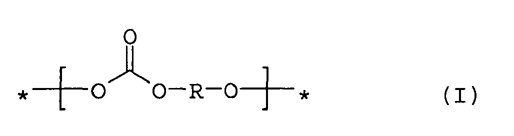 where R is -(CH₂)ₙ where n = 3, 4, 5, 6 or 7 or is a radical of the formula: 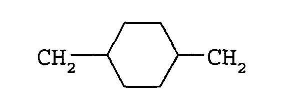 and which has a hydroxyl functionality in the range from 2 to 4.

5. A composition as claimed in any preceding claim, wherein component b) is a polycaprolactonediol.

6. A composition as claimed in any preceding claim, wherein the polyisocyanate is a diisocyanate of the formula
OCN-(CH₂)ₙ-NCO,
where n is from 2 to 8, or is isophorone diisocyanate.

7. A composition as claimed in any preceding claim, wherein the blocked polyisocyanate prepolymer is obtainable by reaction of the components a) to d) to form the corresponding prepolymer having free isocyanate groups and dispersion of the prepolymer in an aqueous bisulphite solution.

8. A composition as claimed in claim 7, wherein the concentration of the bisulphite solution is in the range from 3 to 30% by weight.

9. A composition as claimed in any preceding claim in the form of an aqueous dispersion having a pH in the range from 5 to 7.

10. A composition as claimed in any preceding claim which is essentially free of organic solvent.

11. A process for antifelt finishing of wool or wool-containing materials, which comprises the wool or the wool-containing materials having applied to it or them a composition as claimed in any of claims 1 to 10 and subsequently being subjected to a heat treatment in the range from 100 to 190°C.

12. A process as claimed in claim 11, **characterized in that** the heat treatment is carried out for a period in the range from 10 s to 300 s.

## Revendications

1. Composition aqueuse, comprenant un prépolymère de polyisocyanate coiffé de bisulfite, qui, par rapport à l'état non coiffé, est constitué de :
a) 10 à 40 % en poids d'au moins un polyétherpolyol comme composant a) ;
b) 20 à 85 % en poids d'au moins un polyol oligomère, comme composant b), qui est choisi parmi les polycarbonatepolyols et les polycaprolactonepolyols ;
c) 5 à 30 % en poids d'au moins un polyisocyanate comme composant c) ; et
d) 0 à 30 % en poids d'un ou plusieurs autres composants d), qui présentent au moins un groupement pouvant réagir avec des groupements isocyanate,
respectivement, par rapport au prépolymère non coiffé, et qui présente une valeur NCO dans la plage de 2,5 à 5,0.

2. Composition selon la revendication 1, dans laquelle le prépolymère de polyisocyanate est constitué de :
a) 10 à 35 % en poids de composant a),
b) 40 à 80 % en poids de composant b) et
c) 10 à 25 % en poids de composant c).

3. Composition selon la revendication 1 ou 2, dans laquelle le polyétherpolyol est un polyalkylèneglycol(en C₂-C₄) linéaire ou ramifié ayant un poids moléculaire dans la plage de 400 à 4000 et une fonctionnalité hydroxyle de 2 à 4.

4. Composition selon l'une quelconque des revendications précédentes, dans laquelle le composant b) est un polycarbonatepolyol qui est essentiellement constitué d'unités récurrentes de formule générale I 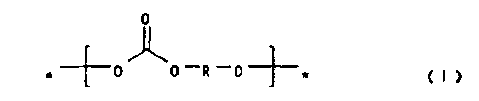 dans laquelle R représente -(CH₂)ₙ, n étant égal à 3, 4, 5, 6 ou 7, ou un radical de formule suivante 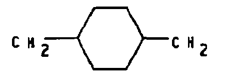 et qui présente une fonctionnalité hydroxyle dans la plage de 2 à 4.

5. Composition selon l'une quelconque des revendications précédentes, dans laquelle le composant b) est un polycaprolactonediol.

6. Composition selon l'une quelconque des revendications précédentes, dans laquelle le polyisocyanate est un diisocyanate de formule
OCN-(CH₂)ₙ-NCO,
dans laquelle n a une valeur de 2 à 8, ou un diisocyanate d'isophorone.

7. Composition selon l'une quelconque des revendications précédentes, dans laquelle on peut obtenir le prépolymère de polyisocyanate coiffé en mettant à réagir les composants a) à d) en vue d'obtenir le prépolymère correspondant avec des groupements isocyanate libres et en dispersant le prépolymère dans une solution aqueuse de bisulfite.

8. Composition selon la revendication 7, dans laquelle la solution de bisulfite présente une concentration dans la plage de 3 à 30 % en poids.

9. Composition selon l'une quelconque des revendications précédentes sous la forme d'une dispersion aqueuse ayant une valeur de pH dans la plage de 5 à 7.

10. Composition selon l'une quelconque des revendications précédentes, qui est sensiblement exempte d'un solvant organique.

11. Procédé d'apprêtage sans feutrage de laine ou de matériaux à base de laine, dans lequel on applique sur la laine ou sur les matériaux à base de laine une composition selon l'une quelconque des revendications 1 à 10 et, ensuite, on soumet le tout à un traitement thermique à une température de 100 à 190 °C.

12. Procédé selon la revendication 11, **caractérisé en ce que** le traitement thermique s'effectue sur une période de temps de 10 s à 300 s.
